**Europäisches Patentamt**

(19) **European Patent Office**

**Office européen des brevets**

(11) Numéro de publication: **0 286 553 B1**

(12) **FASCICULE DE BREVET EUROPEEN**

(45) Date de publication du fascicule du brevet:
18.07.90

(51) Int. Cl.⁵: **B29C 45/17**, B30B 15/02

(21) Numéro de dépôt: **88420100.5**

(22) Date de dépôt: **25.03.88**

(54) **Dispositif de bridage pour la fixation amovible des moules de conformation sur les plateaux des presses de moulage.**

(30) Priorité: **26.03.87 FR 8704441**

(43) Date de publication de la demande:
**12.10.88 Bulletin 88/41**

(45) Mention de la délivrance du brevet:
**18.07.90 Bulletin 90/29**

(84) Etats contractants désignés:
**AT BE CH DE ES GB GR IT LI LU NL**

(56) Documents cités:
**EP-A- 0 143 878**
**WO-A-83/01038**
**FR-A- 1 537 749**
**FR-A- 2 356 499**
**FR-A- 2 552 366**
**US-A- 4 529 371**

(73) Titulaire: **Coutier, André Clément, Le Pont d'Enfer,
F-01410 Champfromier(FR)**

(72) Inventeur: **Coutier, André Clément, Le Pont d'Enfer,
F-01410 Champfromier(FR)**

(74) Mandataire: **Monnier, Guy et al, Cabinet
Monnier 150 Cours Lafayette B.P. 3058, F-69393 Lyon
Cédex 03(FR)**

ACTORUM AG

## Description

On sait que pour opérer la fixation amovible de chacun des deux éléments d'un moule de conformation sur l'un ou l'autre des deux plateaux d'une presse de moulage classique, on a recours à des dispositifs de bridage qui doivent assurer une solidarisation parfaitement efficace, tout en étant de manoeuvre aisée et rapide afin de faciliter le remplacement d'un moule par un autre.

Un pareil dispositif est par exemple connu du document FR-A 2 356 499.

La présente invention a pour objet un dispositif de bridage à actionnement par fluide comprimé qui est de nature à répondre particulièrement bien aux exigences de la pratique.

Le dispositif suivant l'invention est caractérisé en ce qu'il comprend d'une part sur l'une des deux pièces à assembler, un ergot en saillie pourvu d'une tête qui déborde radialement par rapport à son fût, d'autre part sur l'autre pièce un tiroir associé à un vérin à double effet qui assure son déplacement alternatif suivant un plan orienté obliquement par rapport à celui des pièces précitées, lequel tiroir est découpé d'une ouverture en forme de boutonnière dont la partie à plus grand diamètre est propre à être traversée par la tête débordante tandis que la partie à plus petit diamètre ne laisse passage qu'au fût de l'ergot.

Le dessin annexé, donné à titre d'exemple, permettra de mieux comprendre l'invention, les caractéristiques qu'elle présente et les avantages qu'elle est susceptible de procurer :

Fig. 1 est une coupe verticale montrant en superposition, préalablement à leur assemblage, un plateau de presse et un élément de moule équipés d'un dispositif de bridage suivant l'invention.

Fig. 2 est une coupe transversale montrant le guidage du tiroir de ce dispositif.

Fig. 3 est une vue en plan du tiroir supposé à l'état démonté.

Fig. 4 et 5 sont des coupes longitudinales analogues à celle de fig. 1, montrant les pièces du dispositif à deux phases du cycle de fonctionnement.

Fig. 6 et 7 sont des coupes horizontales de détail illustrant la position relative du tiroir et de l'ergot aux phases correspondant à fig. 4 et à fig. 5.

Sur ce dessin, on a supposé que le dispositif de bridage envisagé était utilisé pour la fixation d'un élément de moule 1 contre la face inférieure du plateau supérieur 2 d'une presse de moulage quelconque.

Le dispositif comprend en premier lieu un ergot 3 vissé ou autrement fixé sur l'élément 1 afin de faire saillie sur la face supérieure dudit élément. On observera que cet ergot 3 comporte un fût cylindrique $3\underline{a}$ pourvu d'une tête supérieure $3\underline{b}$ à plus grand diamètre.

En vis-à-vis de chacun des ergots 3 prévus sur l'élément 1, le plateau 2 comporte une douille cylindrique 4 rapportée dans une creusure verticale borgne dudit plateau. Dans le logement intérieur défini par cette douille 4 coulisse axialement un poussoir 5 qu'un ressort 6 tend à chasser à l'extérieur, ce mouvement étant limité par portée contre un jonc annulaire 7 engagé dans une gorge de la douille 4. On observera que la face du poussoir 5 qui est tournée vers le bas est creusée d'une empreinte $5\underline{a}$ à profil conique, propre à accueillir la partie supérieure, elle-même à profil tronconique, de la tête débordante $3\underline{b}$ de l'ergot 3.

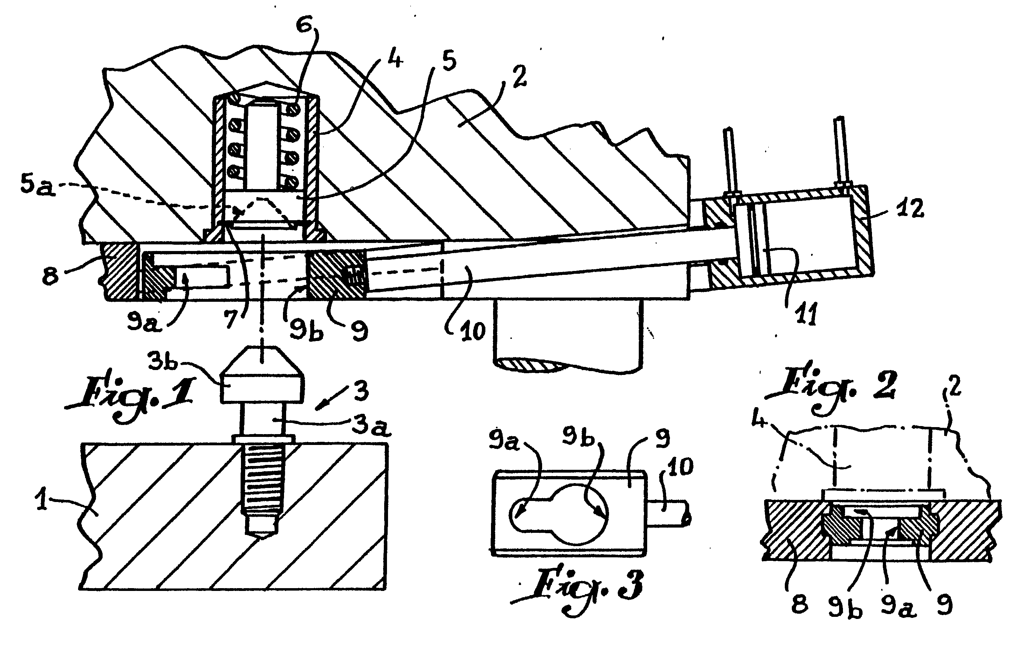

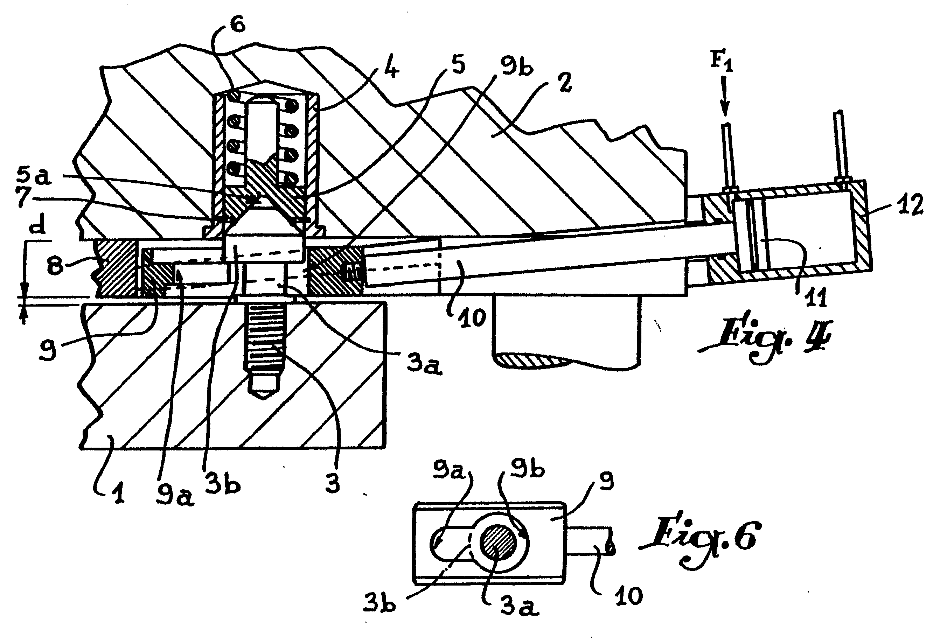

Contre la face inférieure du plateau .2, on a rapporté une pièce 8 (fig. 2) formant coulisse pour le guidage d'un tiroir 9 à mouvement alternatif. On notera que les rainures longitudinales de la pièce ou coulisse 8 sont orientées obliquement, de telle sorte que le tiroir 9, relié par une tige oblique 10 au piston 11 (fig. 1) d'un vérin hydraulique 11-12 du type à double effet, se déplace suivant un plan lui-même orienté obliquement par rapport à la face inférieure plane du plateau 2. Bien évidemment, le cylindre 12 est rigidement fixé contre la paroi latérale de ce plateau 2.

Comme montré en détail en fig. 3, le tiroir 9 est découpé d'une ouverture verticale en forme de boutonnière, présentant une partie $9\underline{a}$ dont le diamètre intérieur correspond, à un léger jeu près, au diamètre du fût $3\underline{a}$ de l'ergot 3, et une partie $9\underline{b}$ à plus grand diamètre, propre à être traversée par la tête débordante $3\underline{b}$ dudit ergot.

Le fonctionnement du dispositif de bridage ci-dessus décrit ressort des explications qui précèdent et va de toute manière être maintenant décrit en référence aux fig. 4 à 7.

En fig. 4, on a supposé qu'en vue de la fixation de l'élément 1 du moule contre le plateau 2 de la presse, on avait présenté ledit élément 1 de façon à ce que l'ergot 3 de chacun des dispositifs de bridage soit disposé en coïncidence avec la douille correspondante 4 de ce plateau. On conçoit que le rapprochement des deux pièces 2 et 1 provoque l'engagement de la tête $3\underline{b}$ de chaque ergot 3 à l'intérieur de la partie $9\underline{b}$ à grand diamètre de l'ouverture du tiroir 9, celui-ci ayant été à cet effet amené par le vérin 11-12 à sa position la plus avancée.

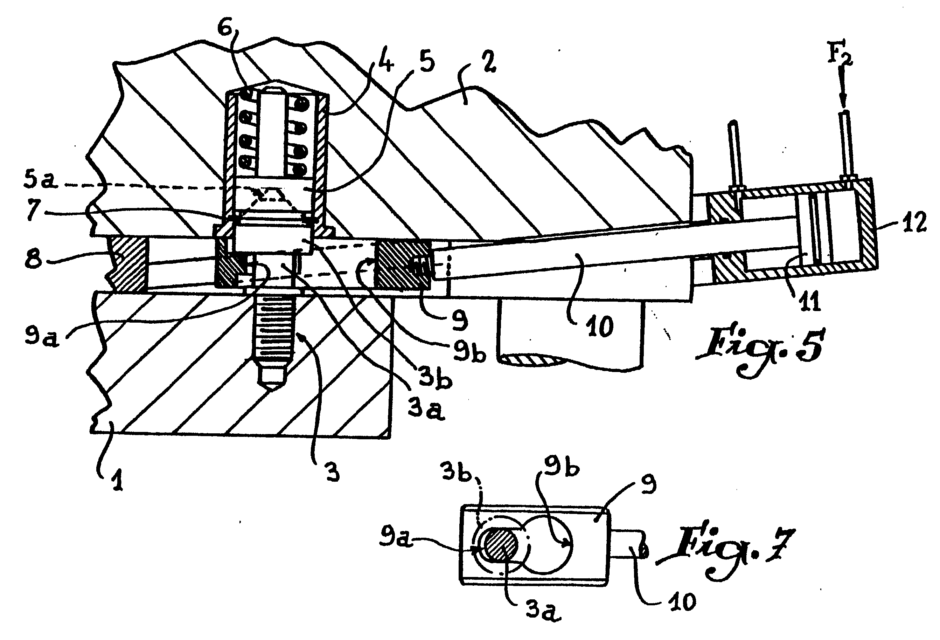

On notera que l'empreinte conique $5\underline{a}$ des poussoirs 5 assure, en liaison avec la partie supérieure de la tête débordante $3\underline{b}$ des ergots 3, l'autocentrage des deux pièces 1 et 2. Il suffit alors d'admettre le fluide hydraulique dans la chambre avant du vérin 11-12 (flèche F1 de fig. 4). Comme montré en fig. 5, le recul du piston 11 provoque le déplacement oblique du tiroir 9 ; les bords de la partie $9\underline{a}$ à plus petit diamètre prennent appui contre le face inférieure annulaire de la tête $3\underline{b}$ de l'ergot 3 considéré, en exerçant de ce fait un effort vertical qui assure le bridage des deux pièces 1 et 2. l'examen comparatif des fig. 6 et 7 fait bien apparaître que la coopération du tiroir 9 et de la tête débordante $3\underline{b}$ de l'ergot 3 opère un verrouillage parfaitement efficace.

Il convient d'observer que par suite de l'obliquite des rainures de la coulisse 8 et des efforts de frottement ainsi engendrés, on obtient un effet auto-bloquant qui assure le maintien du bridage, même dans le cas où une panne dans le circuit hydraulique associé au vérin 11-12 surviendrait au cours de l'utilisation de la presse.

Le bridage précité a bien entendu provoqué le recul du poussoir 5 dans la douille 4, à l'encontre du ressort 6. Pour opérer le déverrouillage des deux pièces 1 et 2, il suffit d'admettre le fluide sous pression dans la chambre arrière du vérin 11-12 (flèche F2 de fig. 5). Comme par suite de la présence de la tige 10 à l'intérieur de la chambre opposée, l'effort de déverrouillage est en tout étant de cause plus important que l'effort de bridage précédemment développé, il ne peut y avoir de blocage et le tiroir 9 est ramené à la position suivant fig. 4 et 6. Le ressort 6 chasse le poussoir 5 et l'ergot 3 vers le bas, si bien que l'élément 1 se trouve décollé du plateau 2 d'une distance d qui facilite son enlèvement.

L'ensemble de la manoeuvre ne nécessite aucune intervention mécanique manuelle. L'équipement à prévoir sur les moules est peu onéreux et ne comporte aucune gêne puisque chaque élément de moule peut déborder par rapport au plateau correspondant.

Il va de soi qu'en certains cas particulier la disposition peut être inversée, en ce sens que les ergots 3 sont susceptibles d'être prévus sur chaque plateau de la presse, les tiroirs 9 et les vérins 11-12 étant alors fixés sur les éléments du moule.

## Revendications

1. Dispositif de bridage pour la fixation amovible des moules de conformation sur les plateaux des presses de moulage, caractérisé en ce qu'il comprend d'une part sur l'une (1) des deux pièces (1, 2) à assembler un ergot en saillie (3) pourvu d'une tête (3b) qui déborde radialement par rapport à son fût (3a), d'autre part sur l'autre pièce (2) un tiroir (9) associé à un vérin à double effet (11-12) qui assure son déplacement alternatif suivant un plan orienté obliquement par rapport à celui des pièces précitées (1, 2), lequel tiroir (9) est découpé d'une ouverture en forme de boutonnière dont la partie (9b) à plus grand diamètre est propre à être traversée par la tête débordante (3b) tandis que la partie (9a) à plus petit diamètre ne laisse passage qu'au fût (3a) de l'ergot (3).

2. Dispositif suivant la revendication 1, caractérisé en ce que la pièce (2) qui porte le tiroir (9) présente un logement cylindrique (4) à l'intérieur duquel coulisse un poussoir (5) associé à des moyens élastiques (6) qui permettent audit poussoir de reculer sous l'effet de la tête débordante (3b) de l'ergot (3) lors du bridage, et de repousser cet ergot lors du déverrouillage afin de décoller les deux pièces (1, 2).

3. Dispositif suivant la revendication 2, caractérisé en ce que la tête débordante (3b) de l'ergot (3) comporte un profil substantiellement conique tandis que le poussoir (5) est creusé d'une empreinte (5a) établie à un profil correspondant afin d'opérer le centrage automatique des deux pièces (1, 2) à assembler.

## Patentansprüche

1. Verriegelungsvorrichtung für die lösbare Befestigung von Formen zur Formgebung auf den Tischen von Formpressen, dadurch gekennzeichnet, daß einerseits an dem einen (1) von zwei zusammenzufügenden Teilen (1, 2) ein vorspringender Stift (3), der mit einem Kopf (3b) versehen ist, welcher mit Bezug auf seinen Schaft (3a) radial übersteht, und andererseits an dem anderen Teil (2) ein Schieber (9) vorgesehen sind, der mit einem doppeltwirkenden Zylinder (11 bis 12) verbunden ist, welcher dessen hin- und hergehende Verschiebung entlang einer Ebene gewährleistet, die mit Bezug auf die der vorerwähnten Teile (1, 2) schräg ausgerichtet ist, und daß im Schieber (9) eine Öffnung in Form eines Knopflochs ausgeschnitten ist, durch deren einen größeren Durchmesser aufweisenden Abschnitt (9b) der überstehende Kopf (3b) hindurchführbar ist, während der einen kleineren Durchmesser aufweisende Abschnitt (9a) nur einen Durchtritt für den Schaft (3a) des Stiftes (3) läßt.

2. Vorrichtung nach Anspruch 1, dadurch gekennzeichnet, daß das den Schieber (9) tragende Teil (2) eine zylindrische Lagerung (4) aufweist, in derem Innern ein Stößel (5) gleitet, der mit elastischen Einrichtungen (6) verbunden ist, welche es dem Stößel gestatten, sich unter der Wirkung des überstehenden Kopfes (3b) des Stiftes (3) während des Verriegelns zurückzuziehen und diesen Stift während der Entriegelung zurückzuschieben, um die beiden Teile (1, 2) zu trennen.

3. Vorrichtung nach Anspruch 2, dadurch gekennzeichnet, daß der überstehende Kopf (3b) des Stiftes (3) ein im wesentlichen konisches Profil einschließt, während der Stößel (5) eine Vertiefung (5a) aufweist, die mit einem entsprechenden Profil ausgestattet ist, um die automatische Zentrierung der beiden zusammenzufügenden Teile (1, 2) zu bewirken.

## Claims

1. Clamping mechanism for the detachable fixing of shaping moulds to the platens of moulding presses, characterized in that it comprises on the one hand on one (1) of the two parts (1, 2) to be assembled, a projecting lug (3) having a head (3b), which projects radially with respect to its shank (3a) and on the other hand on the other part (2) a slide valve (9) associated with a double-acting jack (11, 12), which ensures its alternating displacement along a plane oriented obliquely with respect to that of the aforementioned parts (1, 2), said slide valve (9) having a buttonhole-shaped opening, whose larger diameter portion (9b) can be traversed by the projecting head (3b), whilst the smaller diameter portion (9a) only permits the passage of the shank (3a) of lug (3).

2. Mechanism according to claim 1, characterized in that the part (2) carrying the slide valve (9) has a cylindrical recess (4), within which slides a plunger (5) associated with elastic means (6) enabling said plunger to move back under the effect of the projecting head (3b) of lug (3) during clamping and to push away said lug during unlocking in order to disengage the two parts (1, 2).

3. Mechanism according to claim 2, characterized in that the projecting head (3b) of lug (3) has a substantially conical profile, whilst the plunger (5) has an impression (5a) with a corresponding profile in order to bring about the automatic centring of the two parts (1, 2) to be assembled.

**Fig. 1**

**Fig. 2**

**Fig. 3**

EP 0 286 553 B1

Fig. 4

Fig. 6

Fig. 5

Fig. 7

EP 0 286 553 B1